**Europäisches Patentamt**

**European Patent Office**

**Office européen des brevets**

(19)

(11) Numéro de publication: **0 023 462**
A1

(12) **DEMANDE DE BREVET EUROPEEN**

(21) Numéro de dépôt: **80401116.1**

(22) Date de dépôt: **28.07.80**

(51) Int. Cl.³: **B 65 G 47/26**
**B 65 G 13/07**

(30) Priorité: **30.07.79 FR 7919607**

(43) Date de publication de la demande:
**04.02.81 Bulletin 81/5**

(84) Etats Contractants Désignés:
**AT BE CH DE GB IT LI LU NL SE**

(71) Demandeur: **SOCIETE MECANIQUE GENERALE ET DECOLLETAGE TOURNAGE**
**ZAI de la Marinière 31 Rue Gutenberg Bondoufle**
**F-91032 Evry Cedex(FR)**

(72) Inventeur: **Rolland, Guy**
**33 Rue Francoeur**
**F-91170 Viry Chatillon(FR)**

(74) Mandataire: **Phélip, Bruno et al,**
**c/o Cabinet HARLE & LECHOPIEZ 21, rue de La Rochefoucauld**
**F-75009 Paris(FR)**

(54) **Transporteur accumulateur.**

(57) L'invention concerne un transporteur accumulateur.

Le transporteur comprend un châssis 2, une sole à rouleaux porteurs 3 sur laquelle reposent et se déplacent les charges, au moins une bande sans fin motrice 7 se déplaçant en continu sous les rouleaux porteurs et assurant l'entraînement en rotation de ceux-ci par friction, des rotors de pression 6 à axes de pivotement excentrés supportant ladite bande d'entraînement et destinés à l'appliquer contre les rouleaux porteurs et des détecteurs de présence de charges 9 répartis le long de la sole du transporteur entre les rouleaux porteurs, chaque rotor de pression comportant un boîtier de forme générale sensiblement cylindrique, monté pivotant autour d'un axe excentré et au moins un galet ou came de pression monté tournant à l'intérieur du boîtier, la paroi cylindrique dudit boîtier comportant deux fenêtres décalées angulairement laissant dépasser la surface périphérique du galet, lesdites fenêtres étant toutes deux situées d'un même côté par rapport au plan diamétral du boîtier passant par l'axe de pivotement du rotor.

Application à la manutention mécanique de charges isolées.

FIG.1

1

Transporteur accumulateur

La présente invention concerne un transporteur accumulateur destiné à la manutention mécanique de charges isolées.

Afin de régulariser le débit du flux de produit transporté sur un accumulateur dont le débit d'entrée varie de façon aléatoire, on crée des files d'attente qui doivent pouvoir se remplir et se vider sans qu'il soit nécessaire d'arrêter le transporteur lui-même.

Il existe de nombreuses méthodes connues d'accumulation de charges sur un transporteur, la plus simple faisant appel à la gravité des charges elles-mêmes. L'inconvénient majeur de cette méthode est qu'il se crée une pression de ligne proportionnelle à la pente et au poids total des charges accumulées. Si l'on utilise un transporteur motorisé et si l'on fait patiner les charges sur l'élément transporteur, on obtient également une pression de ligne importante qui dépend du frottement des charges sur l'élément transporteur.

Selon d'autres méthodes d'accumulation connues, on peut faire fonctionner en pas à pas le transporteur en chargeant un transporteur amont tandis qu'un transporteur aval se vide, ou encore

MS.

en utilisant autant de modules de transporteur qu'il y a de charges à accumuler.

Parmi les transporteurs accumulateurs connus, citons les transporteurs débrayables à débrayage automatique par réaction des rouleaux sollicités simultanément par un élément d'entraînement et bloqués par les charges en accumulation. Ces transporteurs présentent l'inconvénient majeur d'être difficiles à régler et de nécessiter des surépaisseurs sur l'élément d'entraînement pour assurer le redémarrage périodique des rouleaux, créant ainsi une certaine pression de ligne. Il existe également des transporteurs débrayables par un dispositif détecteur de la présence des charges, ces détecteurs permettant de débrayer une section du transporteur lorsqu' une charge agit sur lui, ou au contraire d'embrayer cette section lorsque la charge s'est éloignée. Sur ces dispositifs, la fonction embrayage-débrayage est réalisée par un dispositif d'actionnement qui est soit électrique, soit pneumatique, ou encore hydraulique. Bien que performants, ces dispositifs présentent le gros inconvénient d'être d'un coût prohibitif.

Par contre, les systèmes d'embrayage-débrayage purement mécaniques sont généralement plus simples, donc plus économiques et plus robustes.

Les dispositifs d'accumulation de ce type sont déjà connus, notamment par le brevet FR. 1.225.981 qui décrit un transporteur comportant une sole à galets sur laquelle reposent les charges et une bande centrale motrice qui les entraîne, l'entraînement étant soit assuré section par section par élévation de la bande au-dessus du plan de roulement des charges, de manière à s'appliquer contre lesdites charges, soit supprimé par abaissement au-dessous dudit plan de roulement, la commande étant assurée par des détecteurs de présence desdites charges.

L'inconvénient majeur de ce type de transporteur est qu'il n'accepte pas une gamme de poids au mètre très étendue. En effet, le dispositif embrayage-débrayage est relié au dispositif de détection par l'intermédiaire d'un jeu de leviers de telle sorte qu'il existe une relation linéaire entre les efforts nécessaires pour actionner le détecteur et ceux que peut exercer l'ensemble dispositif embrayage-débrayage et bande d'entraî- nement sur les charges à faire circuler. Par conséquent, si l'on règle les détecteurs pour que les charges légères puissent agir sur eux, on obtiendra un effort d'entraînement assez faible, insuffisant pour des charges lourdes transportées. Inversement, si l'on règle les détecteurs pour que les charges lourdes soient entraînées, les charges légères ne pourront pas agir sur lesdits détecteurs et leur présence ne sera donc pas détectée.

Des perfectionnements apportés à ce transporteur-accumulateur connu permettent d'éliminer ces inconvénients grâce à un réglage indépendant de la pression exercée sur le détecteur de présence et de la pression exercée sur le dispositif embrayage-débrayage de l'élément d'entraînement.

L'un de ces dispositifs connus comportant
des cammes à méplats pour appliquer l'élément
d'entraînement contre les rouleaux porteurs,
conduit à un fonctionnement très bruyant, du fait
que, à chaque rotation des cames, l'élément
d'entraînement monte et descend et frappe contre
les rouleaux porteurs. En outre, en phase d'accumulation, la bande d'entraînement des rouleaux
porteurs frotte sur les méplats des cames, ce
qui consomme de l'énergie, use la bande et
accroît l'effort nécessaire pour réembrayer le
mécanisme.

Dans le but d'améliorer ce transporteuraccumulateur existant, il a été mis au point un
système à double came grâce auquel le fonctionnement est nettement moins bruyant du fait que la
bande n'est plus soumise à un mouvement pulsé
et ne bat plus contre les rouleaux porteurs, mais
en phase accumulation, ladite bande frotte toujours sur les méplats de la double came avec les
inconvénients précités.

Le but de la présente invention est donc de
proposer un transporteur accumulateur débrayable,
sur lequel la pression à exercer sur le détecteur
pour détecter la présence des charges est indépendante de la pression exercée par le dispositif
embrayage-débrayage de l'élément d'entraînement,
et qui ne présente pas les différents inconvénients
précités à savoir un battement de l'élément
d'entraînement, générateur de bruit, et un frottement dudit élément d'entraînement sur les cames d'embrayage, générateur d'usure et de perte d'énergie.

Selon l'invention, le transporteur accumulateur pour charges isolées comprend un châssis, une sole à rouleaux porteurs sur laquelle reposent et se déplacent les charges, au moins une bande sans fin motrice se déplaçant en continu sous les rouleaux porteurs et assurant l'entraînement en rotation de ceux-ci par friction, des rotors de pression à axe de pivotement excentré supportant ladite bande d'entraînement et destinés à l'appliquer contre les rouleaux porteurs, et des détecteurs de présence de charges répartis le long de la sole du transporteur entre les rouleaux porteurs, chaque rotor de pression dudit transporteur selon l'invention comportant un boîtier de forme générale à peu près cylindrique monté pivotant autour d'un axe excentré et au moins un galet ou came de pression monté tournant à l'intérieur du boîtier et centré par rapport à sa périphérie, la paroi cylindrique dudit boîtier comportant deux fenêtres décalées angulairement laissant dépasser la surface périphérique du galet, lesdites fenêtres étant toutes situées d'un même côté par rapport au plan diamétral du boîtier qui passe par l'axe de pivotement du rotor.

Préférentiellement, une face de chaque boîtier de rotor comporte deux pions d'arrêt situés à des distances différentes de l'axe de pivotement du rotor, une réglette de commande

munie d'encoches étant montée coulissante sur le châssis du transporteur, le long de la face du boîtier portant les doigts d'arrêt de chaque rotor, lesdites réglettes étant reliées chacune à un détecteur par une tringlerie de commande qui assure leur déplacement parallèlement auxdites faces du boîtier.

L'invention va maintenant être décrite plus en détail en se référant à un mode de réalisation particulier cité à titre d'exemple non limitatif et représenté sur les dessins annexés dans lesquels :

Fig. 1 représente un transporteur à rouleaux équipé de rotors d'application de bandes selon l'invention.

Fig. 2 représente une vue éclatée d'un rotor d'application selon l'invention.

Fig. 3 représente une perspective arrière du rotor de la fig. 2.

Fig. 4 représente l'axe de montage du rotor sur le châssis ainsi que la réglette de commande dudit rotor.

Fig. 5 et 6 illustrent schématiquement le fonctionnement du transporteur selon l'invention.

Fig. 7 à 10 représentant les différentes positions occupées par un rotor selon l'invention au cours des opérations d'embrayage et de débrayage de la bande d'entraînement.

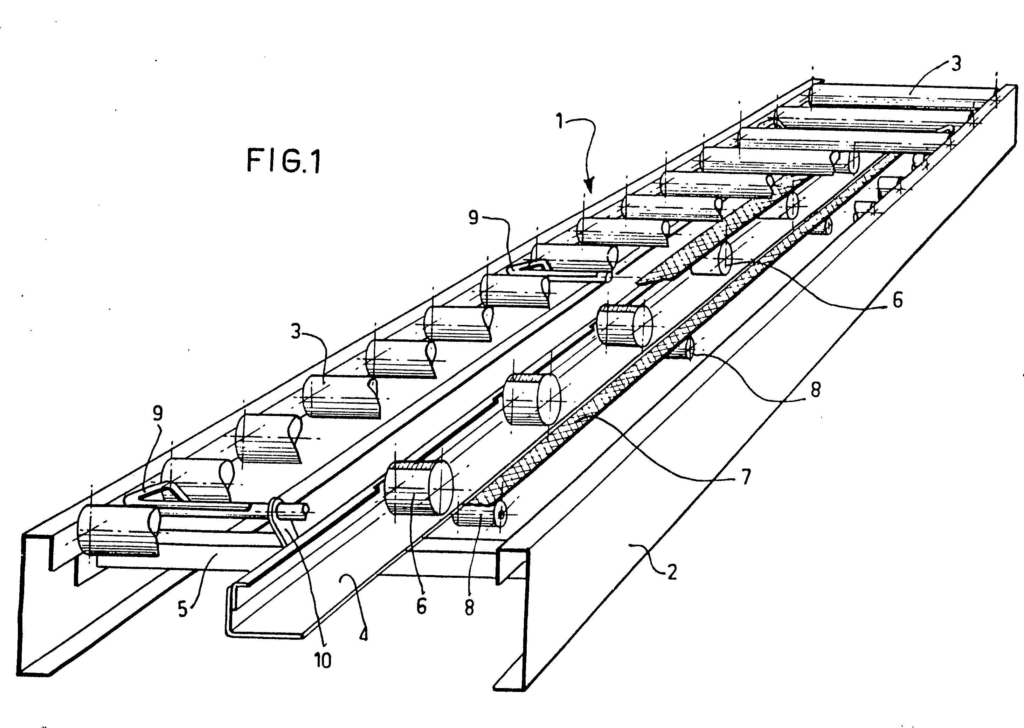

Tel que représenté sur la Fig. 1, le transporteur à rouleaux 1, selon l'invention, comprend un chassis classique 2 constitué de manière connue en soi par un assemblage de poutrelles métalliques, une sole à rouleaux porteurs 3 disposés parallèlement les uns aux autres et pouvant tourillonner librement dans des paliers portés par les longerons latéraux du châssis 2, une poutre centrale longitudinale 4 fixée sur des traverses 5 du châssis 2 et supportant des rotors 6 d'application de bandes d'entraînement 7, ladite bande étant une bande continue entraînée en permanence par un dispositif moteur non représenté et pouvant être appliquée par lesdits rotors 6 sous les rouleaux 3 de la sole du transporteur de manière à entraîner ceux-ci en rotation. Les rotors 6 d'application de bandes sont montés pivotants autour d'axes excentrés fixés sur la poutre centrale 4 parallèlement aux axes de rotation des rouleaux porteurs 3. Le brin inférieur de la bande d'entraînement 7 est supporté par des galets 8 qui l'empêchent de flotter.

A intervalles réguliers, et intercalés entre deux rouleaux porteurs adjacents sont prévus des détecteurs de présence de charges 9 constitués soit par un simple patin, soit par un rouleau monté à l'extrémité d'un levier 10 dont le basculement entraîne le déplacement de toute une tringlerie permettant de commander à distance l'abaissement de la bande d'entraînement 7 hors de contact des rouleaux porteurs 3 ou au contraire son application sous lesdits rouleaux, de manière à assurer leur entraînement par friction.

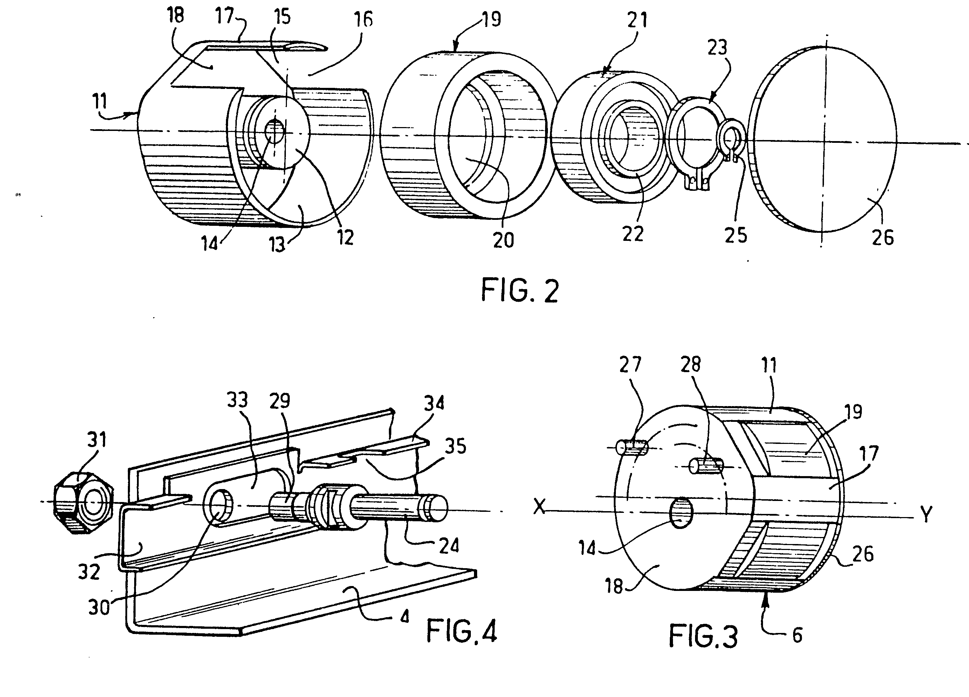

L'élément essentiel de l'invention est constitué par les rotors d'application de bandes 6 dont la figure 2 offre une vue éclatée. Chaque rotor d'application ou de pression de bande comporte un boîtier cylindrique 11 muni d'un moyeu central 12 concentrique à la paroi extérieure 13 dudit boîtier. Le moyeu 12 comporte un alésage excentré 14 qui le traverse de part en part parallèlement à l'axe dudit moyeu.

La paroi de forme générale à peu près cylindrique périphérique 13 du boîtier est échancrée en deux endroits espacés de manière à former deux fenêtres 15 et 16 séparées par une portion de paroi 17. Cette paroi 13 présente, au voisinage de la fenêtre 15, une surépaisseur extérieure, c'est-à-dire que la surface interne de cette paroi est un cylindre de révolution, alors que sa surface extérieure est, ou bien un cylindre de révolution excentré de façon que la distance entre les deux surfaces cylindriques soit maximale au voisinage de celui des bords de la fenêtre 15 qui est le plus loin de la fenêtre 16, ou bien une surface de forme plus compliquée mais aboutissant à une surépaisseur au même endroit. Le boîtier 11 comporte un fond 18 dans lequel est placé le moyeu 12 et il est ouvert sur la face opposée audit fond de manière à pouvoir recevoir un galet 19 comportant un alésage 20 à l'intérieur duquel vient se loger un roulement à billes ou autre 21 dont la bague intérieure 22 est emmanchée sur le moyeu 12 et retenue sur celui-ci par un clip 23. Lorsque le roulement 21 et le galet 19 se sont emmanchés à l'intérieur du boîtier 11, ce dernier est monté sur son axe de pivotement 24 (voir fig.4) sur lequel il est retenu par un clip 25 (fig. 2) et le boîtier est fermé par un couvercle 26.

Sur la face externe du fond 18 du boîtier 11 du rotor sont placés deux pions d'arrêt ou de retenue respectivement 27 et 28 situés à des distances différentes de l'axe xy de l'alésage 14 du boîtier.

Lorsqu'il est logé à l'intérieur du boîtier 11, le galet ou came de pression 19 dépasse hors dudit boîtier par les deux fenêtres 15 et 16 de celui-ci, tel qu'on peut le voir sur la figure 3.

Le rotor 6 ainsi assemblé peut pivoter autour de son axe de pivotement 24 qui traverse le moyeu 12 à l'intérieur de l'alésage excentré 14. Cet axe 24 (figure 4) comporte une queue filetée 29 qui sert à le fixer rigidement à travers un trou 30 percé dans l'aile de la poutre centrale 4, la liaison étant effectuée au moyen d'un écrou 31 bloqué sur ladite queue filetée 29. Le long de ladite aile verticale de la poutre centrale 4, est appliquée une réglette de commande 32 susceptible de coulisser longitudinalement le long de ladite aile verticale et parallèlement au fond 18 des rotors 6. La réglette de commande 32 comporte une lumière 33 qui est traversée par l'axe 24 des rotors 6, ladite réglette comportant en outre une aile rabattue à l'équerre 34 dans laquelle est ménagée une échancrure 35 de largeur supérieure au diamètre des pions d'arrêt 27 et 28 des rotors 6. Lorsque les rotors 6 sont montés sur leurs axes fixés eux-mêmes sur la poutre centrale 4, l'aile 34 de la réglette 32 de commande se déplace sur le trajet parcouru par les pions 27 et 28 de retenue de rotors et elle peut former obstacle à la rotation de ceux-ci.

Le fonctionnement du dispositif selon l'invention est le suivant :

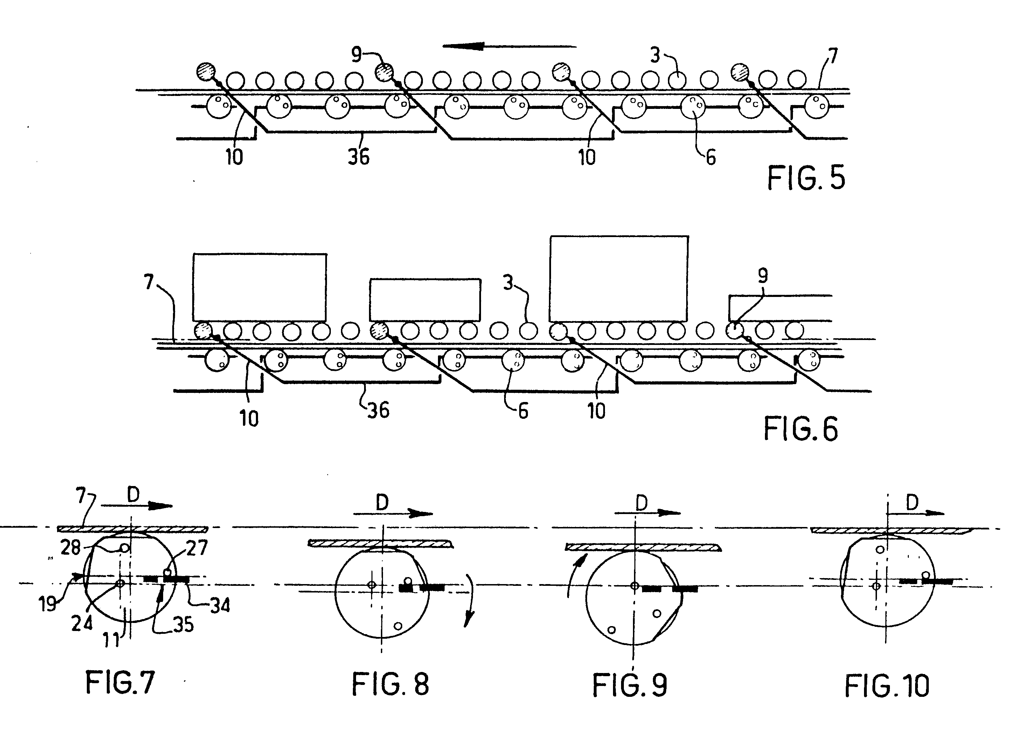

Lorsque aucune charge isolée n'est transportée sur la sole du transporteur selon l'invention (voir fig. 5), les rouleaux porteurs 3 sont entraînés en permanence en rotation par la bande d'entraînement 7 appliquée contre la partie inférieure desdits rouleaux par les rotors d'application ou de pression 6. Les rouleaux détecteurs 9 dépassent alors au-dessus du plan de la sole du transporteur tel que représenté sur la figure 5, chaque rouleau porteur 9 commandant un train de trois rotors 6 par l'intermédiaire du levier 10 et d'une tringlerie 36.

Lorsque des charges isolées sont transportées sur le transporteur (figure 6), chaque charge vient appuyer sur un détecteur 9, faisant pivoter les leviers 10 associés à ces détecteurs, ce qui a pour effet de déplacer vers l'arrière la tringlerie 36, laquelle fait coulisser la réglette de commande 32 le long de l'aile verticale de la poutre centrale 4 du transporteur, ladite réglette 32 présentant ou bien son aile en équerre 34 ou bien l'échancrure 35 sur le trajet des pions d'arrêt 27 et 28 des rotors 6.

Le fonctionnement de l'embrayage et du débrayage de la bande est plus particulièrement décrit ci-dessous en référence aux figures 7 à 10 des dessins.

Tel que représenté sur la figure 7, le boîtier 11 du rotor qui est monté pivotant autour de son axe excentré 24 est retenu par l'aile en équerre 34 de la réglette 32 sur laquelle vient buter son pion d'arrêt 27. Dans cette position (figure 7), la bande d'entraînement 7 repose sur le galet 19 qui déborde hors du boîtier 11 par la fenêtre 16 de celui-ci. La bande 7 est entraînée dans la direction de la flèche D et le galet 19 roule sans frottement le long de ladite bande, ce qui élimine en grande partie l'usure de celle-ci. Lorsqu'une charge isolée passe sur un détecteur 9, celui-ci est enfoncé et fait pivoter son bras de levier 10 qui repousse vers l'arrière la tringlerie de commande 36, laquelle fait coulisser la réglette 32 le long de la poutre centrale 4 et positionne l'échancrure 35 de ladite réglette sur le trajet circulaire du pion 27 du rotor 6. La réglette 32 laisse donc échapper ledit pion et le boîtier du rotor bascule autour de l'axe 24 sur l'effet conjugué de son propre poids et du poids de la bande 7 qui repose sur le galet 19. La rotation du boîtier 11 est interrompue lorsque le second pion 28 vient buter contre l'aile 34 de la réglette 32, du fait que ledit pion se déplace sur une circonférence différente de celle du pion 28. Dans cette position (figure 8), le niveau supérieur du rotor, ainsi que la bande d'entraî- nement 7, s'est affaissé par rapport au plan inférieur des rouleaux porteurs 3 du transporteur, si bien que lesdits rouleaux ne sont plus entraî-

nés par la bande d'entraînement 7 qui n'est plus en contact avec leur partie inférieure. Il y a alors débrayage et accumulation des charges isolées sur le transporteur.

Lorsqu'il est nécessaire de faire repartir les charges, un déplacement de la réglette 32 positionne l'échancrure 35 sur le trajet du second pion 28 de retenue du boîtier du stator, si bien que ledit pion 28 peut s'échapper et le stator continue à basculer sous son propre poids et sous le poids de la bande 7 qui repose sur lui (figure 9). Dans cette position, la bande 7 ne repose plus alors sur le galet 19 de pression mais vient reposer sur la paroi périphérique du boîtier 11 lui-même et entraîne en rotation dans le sens des aiguilles d'une montre le rotor 6 en frottant à la périphérie dudit boîtier 11. Le rotor effectue alors trois-quart de tour et remonte de telle sorte qu'il occupe à nouveau la position qu'il avait à la figure 7, la bande reposant alors à nouveau sur le galet de pression 19 qui est entraîné en rotation et évite ainsi l'usure de ladite bande, laquelle est à nouveau soulevée au niveau du plan inférieur des rouleaux porteurs 3 contre lesquels elle vient en contact pour assurer leur entraînement. Il y a alors embrayage et transport des charges accumulées sur le transporteur.

A noter que les bras de levier 10 des détecteurs sont rappelés en position haute par un ressort de rappel non représenté.

Suivant une variante de réalisation un peu plus compliquée, on prévoit non pas un galet 19, mais deux galets tournant tous les deux à

l'intérieur du boîtier 11, placés chacun au droit d'une fenêtre, et portés chacun sur un axe solidaire du fond 18. Cette solution permet en particulier de réduire la dimension des fenêtres 15 et 16, et par conséquent de rendre plus robuste la portion de paroi intermédiaire 17.

Dans le dispositif selon l'invention, les fonctions de détection et d'embrayage-débrayage sont dissociées, la première fonction servant à contrôler la puissance prélévée sur la bande d'entraînement pour assurer la seconde fonction. On a ainsi une amplification de puissance permettant d'obtenir un rapport poids maximum/ poids minimum élevé. De plus, que l'on se trouve en position embrayée, c'est-à-dire en phase transport, ou débrayée, c'est-à-dire en phase accumulation, la bande d'entraînement 7 roule sur le galet ou came de pression 19 sans frotter sur celui-ci, la came de pression étant en rotation continue, en position haute comme en position basse.

Ce dispositif est un dispositif de prélèvement de puissance contrôlé par un signal de faible niveau qui permet de lever ou d'abaisser un organe quelconque. Par exemple, dans le dispositif décrit, on peut remplacer un train de trois rotors 6 par un ensemble formé d'un rotor et d'un certain nombre de rouleaux fous, ces rouleaux pouvant être abaissés ou relevés par une autre tringlerie qui est elle-même commandée par la rotation du rotor qui a été conservé. On peut ainsi multiplier le nombre de points par où la bande 7 est soulevée sans augmenter exagérément le prix de revient de l'ensemble.

La puissance captée par le rotor dans son mouvement de rotation peut également être utilisée à d'autres usages, par exemple pour lever ou baisser un butoir.

Le dispositif, et en particulier le mode de prélèvement d'énergie par l'intermédiaire de la rotation du rotor, peut être utilisé non seulement en manutention, mais dans tous les domaines où une forte amplification de puissance, combinée avec un déplacement limité, est nécessaire.

Bien entendu, la portée de l'invention n'est pas limitée au seul mode de réalisation donné précédemment à titre d'exemple non limitatif, mais elle couvre également toute variante qui ne différerait que par des détails de construction.

REVENDICATIONS

1. - Transporteur accumulateur pour charges isolées comprenant un châssis, une sole à rouleaux porteurs sur laquelle reposent et se déplacent les charges, au moins une bande sans fin motrice se déplaçant en continu sous les rouleaux porteurs et assurant l'entraînement en rotation de ceux-ci par friction, des rotors de pression à axes de pivotement excentrés supportant ladite bande d'entraînement et destinés à l'appliquer contre les rouleaux porteurs et des détecteurs de présence de charges répartis le long de la sole du transporteur entre les rouleaux porteurs, caractérisé en ce que chaque rotor de pression comporte un boîtier de forme générale à peu près cylindrique, monté pivotant autour d'un axe excentré, et au moins un galet ou came de pression monté tournant à l'intérieur du boîtier, et en ce que la paroi cylindrique dudit boîtier comporte deux fenêtres décalées angulairement laissant dépasser la surface périphérique du galet, lesdites fenêtres étant toutes deux situées d'un même côté par rapport au plan diamétral du boîtier passant par l'axe de pivotement du rotor.

2. - Transporteur selon la revendication 1, caractérisé en ce qu'une face de chaque boîtier de rotor comporte deux pions d'arrêt situés à des distances différentes de l'axe de pivotement du rotor, en ce qu'une réglette de commande munie d'encoches est montée coulissante sur le châssis le long de la face du boîtier portant les doigts d'arrêt de chaque rotor, et en ce que lesdites réglettes sont reliées chacune à un détecteur par une tringlerie de commande qui assure leur déplacement parallèlement auxdites faces des boîtiers.

3. - Transporteur selon l'une quelconque des revendications 1 ou 2, caractérisé en ce qu'il comprend un galet unique 19 monté dans le boîtier 11, et centré par rapport à la périphérie de celui-ci.

4. - Transporteur selon l'une des revendications 1 ou 2, caractérisé en ce qu'il comprend deux galets tournant tous les deux à l'intérieur du boîtier 11 et placés chacun au droit d'une fenêtre.

5. - Transporteur selon l'une quelconque des revendications 1 à 4, caractérisé en ce qu'on utilise l'énergie correspondant à la rotation du rotor pour actionner d'autres organes tels que des rouleaux supplémentaires ou un butoir.

FIG.1

1/3

0023462

FIG. 2

FIG.4

FIG.3

2/3

0023462

FIG. 5

FIG.6

FIG.7 FIG. 8 FIG. 9 FIG.10

0023462

**Office européen des brevets**

**RAPPORT DE RECHERCHE EUROPEENNE**

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin. des parties pertinentes | | Revendica-tion concernée | |
| D,A | FR - A - 1 225 981 (RAPIDS-STAN-DARD)<br><br>* Abrégé I.1°; figures 1-3 * | | 1 | B 65 G 47/26<br>13/07 |
| | -- | | | |
| A | FR - A - 1 437 310 (RAPIDS-STAN-DARD)<br><br>* Page 2, colonne 1, lignes 3-61; page 2, colonne 2; page 3, colonne 1, lignes 1-24; figures 1-9 * | | 1,2 | |
| | ---- | | | DOMAINES TECHNIQUES RECHERCHES (Int. Cl. 3)<br><br>B 65 G |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-11-1980 | OSTIJN |

OEB Form 1503.1   06.78